# EUROPÄISCHE PATENTSCHRIFT

(11) **EP 1 127 399 B1**
(45) Veröffentlichungstag und Bekanntmachung des Hinweises auf die Patenterteilung: **10.03.2004**
(21) Anmeldenummer: 99955952.9
(22) Anmeldetag: 03.11.1999
(51) Int. Cl.: H02K 3/52, H02K 15/00

(54) **VORRICHTUNG ZUM WANDELN VON ELEKTRISCHER IN MECHANISCHE ENERGIE UND/ODER UMGEKEHRT SOWIE EIN VERFAHREN ZUM HERSTELLEN EINER SOLCHEN VORRICHTUNG**
DEVICE FOR CONVERTING ELECTRIC ENERGY INTO A MECHANICAL ONE AND/OR FOR DOING THE OPPOSITE AND METHOD FOR PRODUCING SUCH A DEVICE
DISPOSITIF POUR CONVERTIR DE L'ENERGIE ELECTRIQUE EN ENERGIE MECANIQUE ET/OU INVERSEMENT ET PROCEDE POUR PRODUIRE UN DISPOSITIF DE CE TYPE

(30) Priorität: 04.11.1998 DE 19850818
(43) Veröffentlichungstag der Anmeldung: 29.08.2001
(73) Patentinhaber: Pfisterer Kontaktsysteme GmbH & Co. KG, 73650 Winterbach (DE)
(72) Erfinder: FRANK, Erich, Walter, D-73269 Hochdorf (DE)
(74) Vertreter: Crazzolara, Helmut, Dr.
(86) Internationale Anmeldenummer: PCT/EP1999/008402
(87) Internationale Veröffentlichungsnummer: WO 2000/027014

(56) Entgegenhaltungen:
- EP-A- 0 213 863
- EP-A- 0 863 601
- WO-A-97/26700
- DE-A- 19 544 830
- US-A- 4 224 543
- PATENT ABSTRACTS OF JAPAN vol. 018, no. 617 (E-1634), 24. November 1994 (1994-11-24) -& JP 06 233483 A (HONDA MOTOR CO LTD), 19. August 1994 (1994-08-19)

## Beschreibung

Die Erfindung betrifft eine Vorrichtung zum Wandeln von elektrischer in mechanische Energie und/oder umgekehrt gemäß dem Oberbegriff des Anspruchs 1 sowie ein Verfahren zum Herstellen einer solchen Vorrichtung.

Eine Vorrichtung gemäß dem Oberbegriff des Anspruchs 1 ist aus der EP 0 213 863 A2 bekannt. Diese zeigt eine die Wicklungsenden eines Elektromotors verbindende Einrichtung, die in Form einer ringförmigen Platine mit umlaufenden Leiterbahnen und Löt-Anschlußflächen an einem axialen Ende des Elektromotors angeordnet ist. Die Leiterbahnen und damit die Wicklungsenden sind von außerhalb entweder durch von der Platine abstehende Anschlußstifte oder über an weiteren Löt-Anschlußflächen anzulötende Anschlußleitungen kontaktierbar.

Bei anderen bekannten Vorrichtungen stehen die Wicklungsenden der Spulenwicklungen des Rotors und/oder Stators in ausreichender Länge über die Spulenwicklungen ab und werden in Umfangsrichtung an einen gemeinsamen Punkt geführt. Dort werden unter Bildung von Anschlußgruppen die jeweiligen Wicklungsenden miteinander verpreßt und anschließend mit einem elektrischen Anschlußelement versehen. Dies erfordert eine aufwendige und im wesentlichen manuell durchzuführende Verlegung der Wicklungsenden und erhöht außerdem die Baugröße, da die Wicklungsenden über die Spulenwicklungen geführt werden müssen. Außerdem stellt die Verbindung zwischen der Anschlußeinrichtung und den verpreßten Wicklungsenden insbesondere unter reaktionsfördernden Umgebungsbedingungen eine mögliche Fehlerursache beim Betrieb der hergestellten Vorrichtung dar, beispielsweise aufgrund von Kontaktkorrosion.

Die EP 0 863 601 A1 zeigt eine Verbindungseinrichtung für einen Stator, bei der Anschlußverteiler bildende und elektrisch isolierende Verbindungsdrähte in umlaufenden Nuten einer endseitig an dem Stator festgelegten Endplatte eingelegt sind. Die einander zugewandten Enden benachbarter Verbindungsdrähte derselben Anschlußgruppe sind jeweils mit einem zugeordneten Wicklungsende der Spulenwicklung der zugehörigen Anschlußgruppe verpreßt. An jedem Anschlußverteiler ist ein Anschlußdraht der elektrischen Kontaktierung nach außerhalb der Einrichtung geführt.

Die JP 6-233 483 A zeigt ebenfalls eine Verbindungseinrichtung zur elektrischen Verbindung der Wicklungsenden einer Anschlußgruppe von Statorspulenwicklungen.

Die WO 97/26700 zeigt eine Verbindungseinrichtung eines Fahrzeugmotors mit übereinander angeordneten, neuneckigen ringförmigen Verbindungsplatten, an welchen die Wicklungsenden der Spulenwicklung anschweißbar sind und die jeweils einen Crimp-Anschluß zum Crimp-Verbinden mit einer nach außerhalb führenden Anschlußleitung aufweisen. jede Verbindungsplatte besteht aus einer ersten, elektrisch leitfähigen, und einer zweiten, elektrisch isolierenden Schicht.

Die DE 195 44 830 A1 zeigt einen Stator für Elektromotoren, bei dem die Wicklungsenden einer Anschlußgruppe durch elektrisch leitende und in Umfangsrichtung verlaufende Anschlußverteiler einer Verbindungseinrichtung miteinander verbunden sind. Die Anschlußverteiler weisen Anschlußfahnen auf, an welche die Wicklungsenden oder die Motoranschlußleitungen angeschweißt oder angelötet werden.

Die US 4,224,543 zeigt eine Verbindungseinrichtung für Wicklungsenden von Statorspulenwicklungen mit einer Platine, die radiale Einschnitte aufweist zur Aufnahme der Wicklungsenden und von externen Anschlußleitungen, die anschließend mit Anschlußflächen der auf der Platine aufgebrachten Leiterbahnen verlötet werden.

Die US 5,806,169 zeigt ein Verfahren zur Herstellung eines Elektromotors, bei dem der Stator nach dem Anschweißen der Statorwicklungen an entsprechende Anschlußfahnen mittels einer Spritzgießtechnik mit Kunststoff ausgespritzt und umspritzt wird.

Der Erfindung liegt das Problem zugrunde, eine gattungsgemäße Vorrichtung und ein zugehöriges Herstellverfahren bereitzustellen, welche die Nachteile des Standes der Technik überwinden, insbesondere eine geringe Baugröße, eine hohe Kontaktsicherheit bei einfachem Kontaktieren sowie eine lange Lebensdauer und hohe Stromtragfähigkeit auch unter aggressiven Umgebungsbedingungen gewährleistet und dabei einfach herstellbar ist.

Das Problem ist durch die im Anspruch 1 bestimmte Vorrichtung sowie durch das im nebengeordneten Anspruch bestimmte Verfahren gelöst. Besondere Ausführungsarten der Erfindung sind in den Unteransprüchen bestimmt.

Die Vorrichtung gemäß Anspruch 1 kann ein Motor oder ein Generator sein, insbesondere auch eine kombinierte wechsel- oder drehstrombetriebene Motor/Generator-Vorrichtung. Dabei können sowohl auf dem Rotor als auch auf dem Stator Spulenwicklungen entsprechend der Polzahl der Vorrichtung angeordnet sein. Die Verschaltung der einzelnen Wicklungsenden erfolgt erfindungsgemäß mittels einer Verbindungseinrichtung unter Bildung von Anschlußgruppen. Bei einer Dreiphasen-Wechselstromvorrichtung können zum Beispiel drei (Dreieckschaltung), vier (Sternschaltung mit herausgeführtem Stem) oder sechs Anschlußgruppen gebildet werden. Bei sechs Anschlußgruppen kann außerhalb der Vorrichtung eine Umschaltung von Stern- auf Dreieckbetrieb und umgekehrt durch entsprechende Verschaltung der Anschlußgruppen erfolgen. Der Rotor kann innen- oder außenlaufend in Bezug auf den Stator sein. Ein außenlaufender Rotor besitzt bei gleicher Masse ein größeres Trägheits- und Drehmoment. Der Anschlußverteiler ist nach außerhalb des Rotors oder Stators geführt und bildet dort einstückig eine Anschlußeinrichtung. Dies erfolgt vorzugsweise durch entsprechende Biegung oder Formung eines als Anschlußverteiler dienenden Kupferbandes oder -streifens zu einem Buchsen- oder Steckerelement.

Gemäß der besonderen Ausführungsart nach Anspruch 2 können die Wicklungsenden vorteilhaft sehr kurz gewählt werden. Dadurch kommt es nicht nur zu einer Materialeinsparung, sondern auch zu einer geringeren Baugröße der Vorrichtung. Im Falle einer Rotorwicklung weist der Rotor zudem eine geringere bauartbedingte Unwucht auf.

Gemäß der besonderen Ausführungsart nach Anspruch 3 weisen die beispielsweise ringförmigen Anschlußverteiler an den entsprechenden Stellen einstückig ausgebildete Schneid-/Klemmeinrichtungen auf, in welche die Wicklungsenden eingelegt werden können wobei beim Eindrücken ein Durchschneiden der Wicklungsisolation erfolgt. Die Schneid-/Klemmeinrichtung ist vorzugsweise jeweils genau gegenüber dem zugehörigen Wicklungsende angeordnet. Sie kann durch entsprechende Formgebung eines als Anschlußverteiler verwendeten Kupferstreifens oder Kupferrings bereitgestellt werden.

Gemäß der besonderen Ausführungsart nach Anspruch 4 sind die zwei Bänder im wesentlichen halbkreisförmig und koaxial mit der Stator/Rotorachse. Als Anschlußverteiler ist vorzugsweise ein Kupferband oder ein Kupferstreifen vorzusehen, wobei die Band- oder Streifenbreite parallel zur Rotor- bzw. Statorachse ausgerichtet ist. Im Buchsenbereich ist die Band- bzw. Streifenbreite parallel zur Längsachse eines in die Buchse einzusteckenden Steckerelementes ausgerichtet.

Gemäß der besonderen Ausführungsart nach Anspruch 5 sind im Buchsenbereich die beiden Bänder durch ein elastisches Element, vorzugsweise durch eine Wellensicherungsring, miteinander verbunden. Dadurch ist eine dauerhafte Kontaktsicherheit bei gleichzeitig hoher Stromtragfähigkeit gewährleistet.

Gemäß der besonderen Ausführungsart nach Anspruch 6 sind die Anschlußverteiler axial bzw. radial hintereinander angeordnet, wodurch die radiale bzw. axiale Baugröße der Vorrichtung minimierbar ist. Die Angaben radial und axial beziehen sich dabei auf die Drehachse der Vorrichtung.

Gemäß der besonderen Ausführungsart nach Anspruch 7 wird durch die Aufnahmemittel nicht nur eine elektrische Isolation der Anschlußverteiler untereinander gewährleistet, sondern es kann auch durch das Vorsehen von Positionierungsmitteln, beispielsweise Nocken am Aufnahmemittel und Ausnehmungen am zugehörigen Anschlußverteiler, eine exakte umfängliche Positionierung der Anschlußverteiler in Bezug auf die Aufnahmemittel und entsprechend in Bezug auf die Vorrichtung gewährleistet werden. Dadurch werden minimale Anschlußwege zwischen dem Anschlußverteiler und der Spulenwicklung bei gleichzeitig einfacher Montage gewährleistet. Selbstverständlich können die Anschlußverteiler auch ohne Aufnahmemittel direkt an dem Rotor und/oder Stator festgelegt werden.

Bei dem erfindungsgemäßen Verfahren nach Anspruch 8 werden zunächst die elektrisch leitfähigen Bänder der Anschlußverteiler in ein Aufnahmemittel der Verbindungseinrichtung eingelegt, anschließend die Verbindungseinrichtung an dem Rotor oder Stator beispielsweise durch Anschrauben oder Verstiften festgelegt, weiter anschließend die Wicklungsenden mit den zugehörigen Anschlußverteilern elektrisch verbunden und abschließend jeweils eine Steckbuchse der Anschlußeinrichtung aus den einstückig nach außerhalb der Vorrichtung geführten Bändern einer Anschlußgruppe geformt zum elektrischen Kontaktieren der Anschlußgruppen außerhalb der Vorrichtung. Diese Verfahrensschritte können vorteilhaft einfach automatisiert und beispielsweise von industrierobotern ausgeführt werden.

Gemäß der besonderen Ausführungsart nach Anspruch 9 kann das Verbinden der Wicklungsenden mit den zugehörigen Anschlußverteilern mittels einer Schneid-/Klemmeinrichtung oder durch Kleben, Löten oder Schweißen erfolgen. Beim Kleben kommen vorzugsweise hochtemperaturfeste elektrisch leitfähige Klebstoffe zum Einsatz. Beim Löten ist das Hartlöten bevorzugt. Beim Schweißen ist das Punktschweißen bevorzugt.

Gemäß der Ausführungsart nach Anspruch 10 werden die Aufnahmemittel mit den eingelegten Anschlußverteilern, gegebenenfalls unter Verwendung eines Verschlußringes, dicht verschlossen. Dies geschieht vorzugsweise durch Tauchen in ein elektrisch isolierendes Kunstharz. Dabei bleiben vorzugsweise an den Anschlußverteilem Kontaktstellen für das elektrische Verbinden mit den Wicklungsenden zugänglich. Alternativ dazu können auch die mit einer Schneid-/Klemmeinrichtung versehenen Kontaktstellen der Anschlußverteiler vergossen werden, da beim Eindrücken der Wicklungsenden die isolierende Schicht durchdrungen wird. Diese Vorgehensweise hat den Vorteil, daß die Verbindungseinrichtung als komplette Baugruppe auf den Rotor oder Stator aufgesetzt werden kann und in einem Arbeitsgang komplett montiert werden kann.

Gemäß der Ausführungsart nach Anspruch 11 wird der komplett montierte und verdrahtete Rotor oder Stator in Isoliermaterial vergossen.

Weitere Vorteile, Merkmale und Einzelheiten der Erfindung ergeben sich aus den Unteransprüchen sowie der nachfolgenden Beschreibung, in der unter Bezugnahme auf die Zeichnungen mehrere Ausführungsbeispiele im einzelnen beschrieben sind. Dabei können die in den Ansprüchen und in der Beschreibung erwähnten Merkmale jeweils einzeln für sich oder in beliebiger Kombination erfindungswesentlich sein.
- Fig. 1: zeigt einen Querschnitt durch eine erfindungsgemäße Vorrichtung,
- Fig. 2: zeigt eine Aufsicht auf den Stator der Fig. 1,
- Fig. 3: zeigt die elektrische Verdrahtung der Spulenwicklungen,
- Fig. 4: zeigt einen Schnitt entsprechend der Linie IV-IV der Fig. 2,
- Fig. 5: zeigt einen Schnitt entlang der Linie V-V der Fig. 2,
- Fig. 6: zeigt einen Querschnitt entlang der Linie VI-VI der Fig. 2,
- Fig. 7: zeigt eine alternative Ausführungsform der Vorrichtung,
- Fig. 8: zeigt eine Ausschnittsvergrößerung der Fig. 7 im Bereich der Anschlußverteiler und
- Fig. 9: zeigt die Ansicht IX der Anschlußbuchse der Fig. 7.

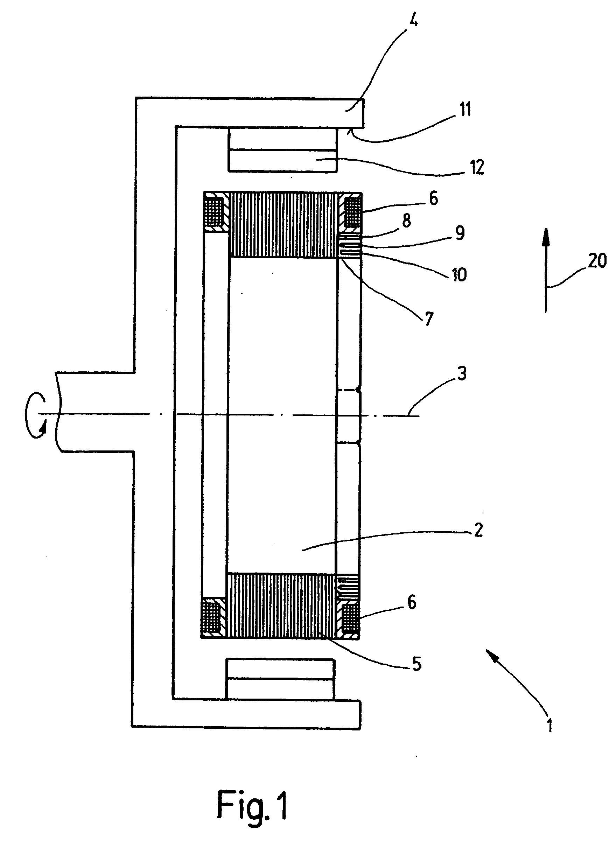

Die Fig. 1 zeigt einen Querschnitt durch eine erfindungsgemäße Vorrichtung. Es handelt sich dabei um eine kombinierte Motor/Generator-Vorrichtung 1 mit einem innenstehenden Stator 2 und einem um die Achse 3 rotierenden außenlaufenden Rotor 4. Das üblicherweise zugehörige Gehäuse ist nicht dargestellt. Auf den geblechten Kern 5 des Stators 2 sind . in Umfangsrichtung aufeinanderfolgend Spulenwicklungen 6 gewickelt. Die Wicklungsenden unterschiedlicher Spulenwicklungen 6 sind unter Bildung von Anschlußgruppen elektrisch miteinander verbunden, wobei eine Verbindungseinrichtung 7, 8, 9, 10 in Umfangsrichtung verlaufende Anschlußverteiler 8, 9, 10 aufweist, die in ein am Stator 2 festlegbares Aufnahmemittel 7 eingelegt sind. Die Anschlußverteiler 8, 9, 10 jeder Anschlußgruppe werden im vorliegenden Ausführungsbeispiel durch jeweils zwei in etwa halbkreisförmig gebogene Kupferbänder gebildet, die in radialer Richtung 20 hintereinander und elektrisch isoliert voneinander angeordnet sind. Die Kupferbänder sind entsprechend den zu tragenden Strömen dimensioniert, beispielsweise haben sie eine Breite x Stärke von 15 x 1 mm². Der außen laufende Rotor 4 umgreift umfänglich den Stator 2 und trägt an der dem Stator 2 zugewandten Fläche 11 Permanentmagneten 12 in einer der Polzahl bzw. der Zahl der Spulenwicklungen 6 entsprechenden Anzahl. Die Spulenwicklungen 6 können bei Bedarf auch eine oder mehrere symmetrisch- oder unsymmetrisch-verteilte Teilanzapfungen aufweisen.

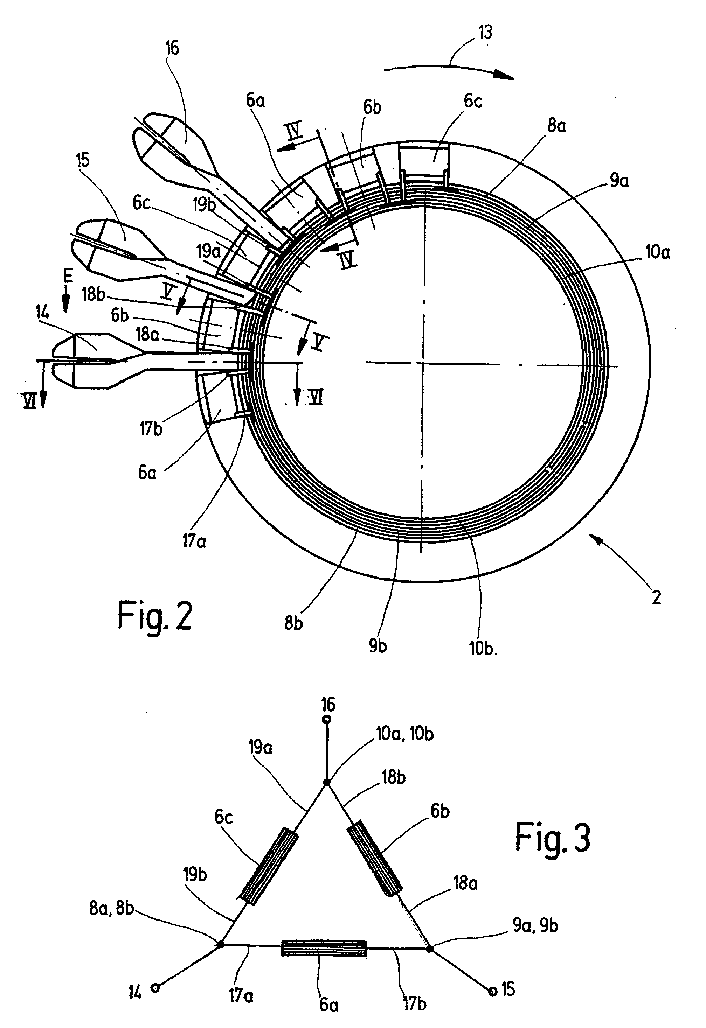

Die Fig. 2 zeigt eine Aufsicht auf den Stator 2 der Fig. 1. Von den über den gesamten Umfang in Umfangsrichtung 13 angeordneten Spulenwicklungen 6 sind aus Gründen der Übersichtlichkeit lediglich sechs Spulenwicklungen 6a, 6b, 6c dargestellt. Der dargestellte Stator 2 ist für einen Dreiphasen-Wechselstromanschluß in Dreieckschaltung verdrahtet. Die Spulenwicklungen 6a, 6b, 6c sind dabei mittels der jeweils etwa halbkreisförmigen Anschlußverteiler 8a, 8b; 9a, 9b; 10a, 10b zu drei Anschlußgruppen verdrahtet und von außerhalb des Stators mittels einer ersten, zweiten und dritten Buchse 14, 15, 16 elektrisch kontaktierbar. Das erste Wicklungsende 17a der Spulenwicklung 6a der ersten Anschlußgruppe ist mit dem Anschlußverteiler 8b verbunden, wogegen das zweite Wicklungsende 17b mit dem Anschlußverteiler 9b verbunden ist. Das erste Wicklungsende 18a der Spulenwicklung 6b der zweiten Anschlußgruppe ist mit dem Anschlußverteiler 9b verbunden, wogegen das zweite Wicklungsende 18b mit dem Anschlußverteiler 10b verbunden ist. Das erste Wicklungsende 19a der Spulenwicklung 6c der dritten Anschlußgruppe ist mit dem Anschlußverteiler 10b verbunden, und das zweite Wicklungsende 19b ist mit dem Anschlußverteiler 8b verbunden. Entsprechendes gilt für den Anschluß der entsprechenden Wicklungsenden an die Anschlußverteiler 8a, 8b, 8c. Die beiden durch jeweils etwa halbkreisförmig gebogene Kupferstreifen gebildeten Anschlußverteiler 8a, 8b werden an einer Stelle des Umfangs einstückig nach oben und/oder nach außen gebogen und die entsprechenden Enden werden unter Bildung eines Buchsenbereiches zu einem elektrischen Anschluß 14 dieser Anschlußgruppe gebogen. Entsprechendes gilt für die beiden Anschlußverteiler 9a, 9b, die einstückig den Anschluß 15 der zweiten Anschlußgruppe bilden, und für die Anschlußverteiler 10a, 10b, die einstückig den elektrischen Anschluß 16 der dritten Anschlußgruppe bilden.

Die Fig. 3 zeigt die elektrische Verdrahtung der in Umfangsrichtung abwechselnd angeordneten Spulenwicklungen 6a, 6b, 6c der Fig. 2, die innerhalb der gebildeten Anschlußgruppen parallel geschaltet sind und insgesamt zu einer Dreieckschaltung mit den drei elektrischen Anschlüssen 14, 15, 16 verdrahtet sind. Sofern eine Dreiphasen-Sternschaltung erforderlich ist, sind insgesamt vier Anschlußgruppen vorzusehen, wobei der Sternpunkt je nach Bedarf über einen vierten Anschluß nach außerhalb des Stators geführt werden kann oder nicht. Soll die Möglichkeit der Umschaltung von Stern- auf Dreieckschaltung und umgekehrt bestehen, sind jeweils beide Wicklungsenden der parallel geschalteten Spulenwicklungen durch voneinander isolierte Anschlußverteiler zu kontaktieren und zu insgesamt sechs elektrischen Anschlüssen zu führen.

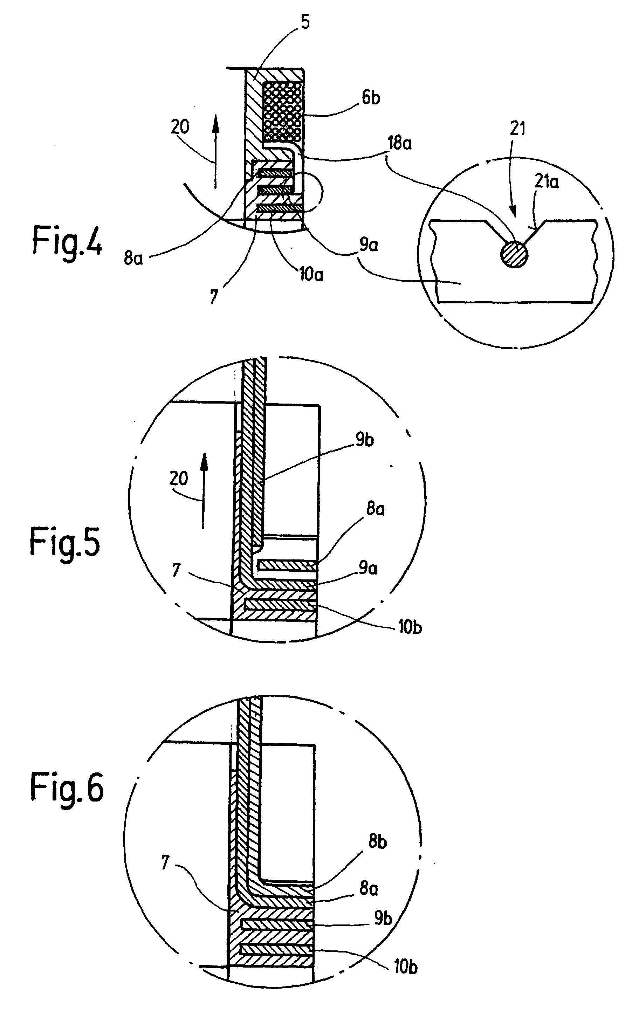

Die Fig. 4 zeigt einen Schnitt entsprechend der Linie IV-IV der Fig. 2. Das erste Ende 18a der auf den Blechkern 5 gewickelten Spulenwicklung 6b ist mit dem in radialer Richtung 20 mittleren Anschlußverteiler 9a mittels einer einstückig mit diesem ausgebildeten Schneid-/Klemmeinrichtung 21 elektrisch verbunden. Beim Eindrücken des isolierten Wicklungsendes 18a wird durch die Schneidflanken 21a die Isolierung durchdrungen und der elektrische Kontakt zwischen dem Anschlußverteiler 9a und dem Wicklungsende 18a hergestellt. Beim weiteren Eindrücken des Wicklungsendes 18a erfolgt das annähernd bündige Abschneiden des Wicklungsdrahtes. Im Bereich des Anschlusses des Wicklungsendes 18a an den Anschlußverteiler 9a weist der in radialer Richtung 20 äußere Anschlußverteiler 8a vorzugsweise eine Ausnehmung auf, um einen elektrisch isolierten Durchtritt des Wicklungsendes 18a zum in radialer Richtung 20 mittleren Anschlußverteiler 9a zu gewährleisten. Alternativ oder ergänzend hierzu kann der äußere Anschlußverteiler 8a auch über seine gesamte Länge eine geringere Streifenbreite aufweisen und/oder tiefer in das Aufnahmemittel 7 eingelegt sein, welches beispielsweise durch einen mit Nuten für die Aufnahme der Anschlußverteiler 8a, 8b, 9a, 9b, 10a, 10b versehenen Kunststoffring gebildet ist.

Die Fig. 5 zeigt einen Schnitt entlang der Linie V-V der Fig. 2. Die beiden gemäß der Fig. 2 etwa halbkreisförmig verlaufenden Anschlußverteiler 9a, 9b sind im Bereich des Schnitts V-V miteinander in elektrischem Kontakt und radial nach außen gebogen. Im Bereich der Zusammenführung der beiden Anschlußverteiler 9a, 9b weist der in radialer Richtung äußere Anschlußverteiler 8a eine Ausnehmung auf, damit der Anschlußverteiler 9b an diesem elektrisch isoliert vorbeigeführt werden kann.

Die Fig. 6 zeigt einen Querschnitt entlang der Linie VI-VI der Fig. 2. Die beiden halbkreisförmig gebogenen Anschlußverteiler 8a, 8b kommen an dieser Stelle des Umfangs miteinander in Kontakt und werden gemeinsam nach außerhalb des Stators 2 geführt. Durch beispielsweise einen im Überlappungsbereich vorgesehenen - nicht dargestellten - Vorsprung auf dem Anschlußverteiler 8a und eine an der entsprechenden Stelle des Anschlußverteilers 8b vorgesehene Ausbuchtung wird beim Einlegen und Zusammenführen der Anschlußverteiler 8a, 8b eine einfache und exakte Positionierung der Anschlußverteiler 8a, 8b in Bezug auf das Aufnahmemittel 7 und in Bezug zueinander gewährleistet. Anstelle von Vorsprung und Ausbuchtung kann beispielsweise auch eine Art Nut/Feder-Kombination in den jeweils zusammengehörenden Anschlußverteilem 8a, 8b; 9a, 9b; 10a, 10b vorgesehen sein.

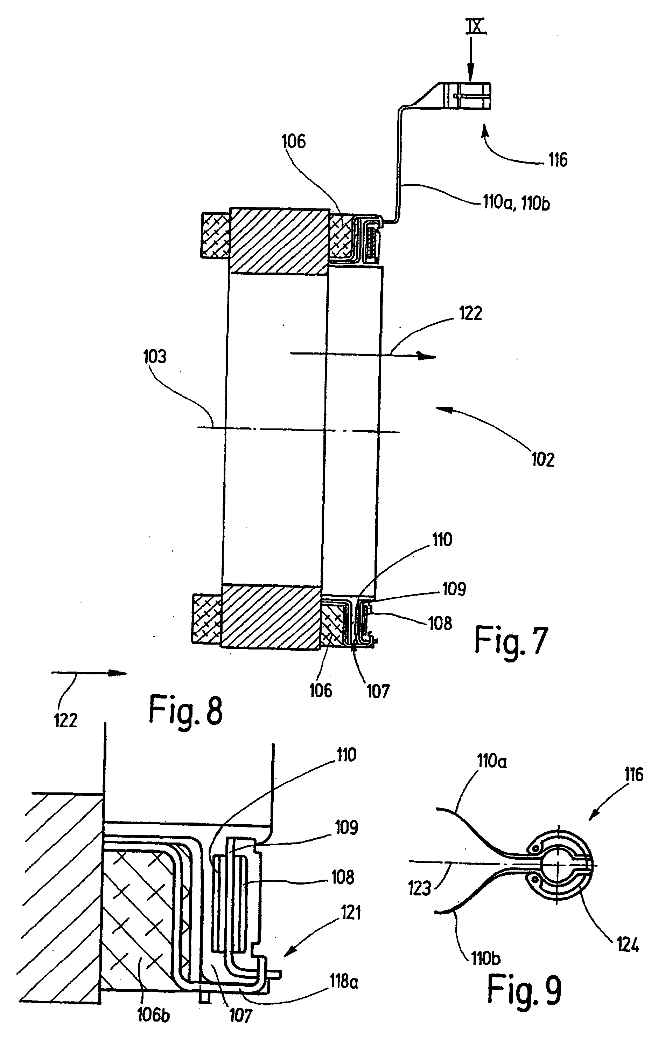

Die Fig. 7 zeigt eine alternative Ausführungsform der erfindungsgemäßen Vorrichtung, wobei wiederum ein innenliegender Stator 102 mit - diesmal nur schematisch dargestellten - Spulenwicklungen 106 vorgesehen ist. Die die Anschlußgruppen elektrisch miteinander verbindenden Anschlußverteiler 108, 109, 110 sind bei diesem Ausführungsbeispiel in zur Rotationsachse 103 des zugehörigen - nicht dargestellten - Rotors parallelen axialen Richtung 122 hintereinander angeordnet und durch das Aufnahmemittel 107 elektrisch voneinander isoliert. Die Fig. 8 zeigt eine Ausschnittsvergrößerung der Fig. 7 im Bereich der Anschlußverteiler 108, 109, 110. Das Wicklungsende 118a der Spulenwicklung 106b ist mittels der Schneid-/ Klemmeinrichtung 121 mit dem in axialer Richtung 122 mittleren Anschlußverteiler 109 elektrisch verbunden.

Die Fig. 9 zeigt die Ansicht IX der Anschlußbuchse 116 der Fig. 7. Die beiden nach oben gebogenen Enden 110a, 110b des Anschlußverteilers 110 sind im Kontaktbereich komplementär und symmetrisch zur senkrecht zur Zeichenebene stehenden Symmetrieebene 123 halbkreisförmig gebogen, um einen Kontaktstift aufnehmen zu können. Die Enden der Anschlußverteiler 110a, 110b sind im Buchsenbereich mittels eines Wellensicherungsrings 124 federnd gesichert.

## Patentansprüche

1. Vorrichtung zum Wandeln von elektrischer in mechanische Energie und/oder umgekehrt mit einem Rotor (4) und einem Stator (2), insbesondere eine kombinierte Motor/Generator-Vorrichtung (1), wobei auf dem Rotor (4) und/oder dem Stator (2) in einer Umfangrichtung 13 aufeinanderfolgend jeweils mindestens zwei Wicklungsenden (1 7a, 17b; 18a, 18b; 19a, 19b) aufweisende Spulenwicklungen (6) angeordnet sind, und die Wicklungsenden (17a, 17b; 18a, 18b; 19a, 19b) verschiedener Spulenwicklungen (6a; 6b; 6c) unter Bildung von Anschlußgruppen elektrisch miteinander verbunden sind, wobei die Vorrichtung eine Verbindungseinrichtung (7, 8, 9, 10) für die Verbindung der Wicklungsenden (17a, 17b; 18a, 18b; 19a, 19b) einer Anschlußgruppe aufweist mit elektrisch leitenden und in Umfangsrichtung verlaufenden Anschlußverteilern (8, 9, 10), die einstückig nach außerhalb der Vorrichtung geführt sind und jeweils eine Anschlußeinrichtung bilden, mittels der die jeweilige Anschlußgruppe außerhalb der Vorrichtung elektrisch kontaktierbar ist, **dadurch gekennzeichnet, daß** die Anschlußverteiler (8, 9, 10) jeder Anschlußgruppe zwei in Umfangsrichtung verlaufende elektrisch leitfähige Bänder (8a, 8b; 9a, 9b; 10a, 10b) aufweisen, die jeweils einstückig nach außerhalb der Vorrichtung geführt sind und dort gemeinsam eine Steckbuchse (14; 15; 16) zum elektrischen Kontaktieren der jeweiligen Anschiußgruppe bilden.

2. Vorrichtung nach Anspruch 1, **dadurch gekennzeichnet, daß** jedes Wicklungsende (17a, 17b; 18a, 18b; 19a, 19b) mit dem zugehörigen Anschlußverteiler (8, 9, 10) in unmittelbarer Nähe der jeweiligen Spulenwicklung (6a, 6b, 6c) verbunden ist.

3. Vorrichtung nach Anspruch 1 oder 2, **dadurch gekennzeichnet, daß** die Anschlußverteiler (8, 9, 10) eine einstückig ausgebildete Schneid-/Klemmeinrichtung (21; 121) für die elektrische Verbindung mit dem zugehörigen Wicklungsende (17a, 17b; 18a, 18b; 19a, 19b) aufweisen.

4. Vorrichtung nach einem der Ansprüche 1 bis 3, **dadurch gekennzeichnet, daß** die zwei Bänder (8a, 8b; 9a, 9b; 10a, 10b) im wesentlichen halbkreisförmig in Umfangsrichtung verlaufen.

5. Vorrichtung nach einem der Ansprüche 1 bis 4, **dadurch gekennzeichnet, daß** im Buchsenbereich (114) die beiden Bänder (110a, 110b) durch ein elastisches Element, vorzugsweise durch einen Wellensicherungsring (124), miteinander verbunden sind.

6. Vorrichtung nach einem der Ansprüche 1 bis 5, **dadurch gekennzeichnet, daß** die Bänder (8a, 8b; 9a, 9b; 10a, 10b) der einzelnen Anschlußgruppen axial hintereinander angeordnet sind, oder unterschiedliche Durchmesser aufweisen und konzentrisch radial hintereinander angeordnet sind.

7. Vorrichtung nach einem der Ansprüche 1 bis 6, **dadurch gekennzeichnet, daß** die Anschlußverteiler (8, 9, 10) in einem an dem Rotor (4) und/oder Stator (2) axial oder radial festlegbaren Aufnahmemittel (7) der Verbindungseinrichtung (7, 8, 9, 10) elektrisch voneinander isoliert angeordnet sind.

8. Verfahren zum Herstellen einer Vorrichtung nach einem der Ansprüche 1 bis 7, mit den Schritten:
. Einlegen der elektrisch leitfähigen Bänder (8a, 8b; 9a, 9b; 10a, 10b) der Anschlußverteiler (8, 9, 10) in ein Aufnahmemittel (7) der Verbindungseinrichtung (7, 8, 9, 10) derart, daß die nicht zu einer gemeinsamen Anschlußgruppe gehörenden Anschlußverteiler (8, 9, 10) voneinander elektrisch isoliert sind,
. Festlegen der Verbindungseinrichtung (7, 8, 9, 10) an dem Rotor (4) und/oder Stator (2),
. elekrisches Verbinden der Wicklungsenden (17a, 17b; 18a, 18b; 19a, 19b) mit den zugehörigen Anschlußverteilern (8, 9, 10), und
. Formen jeweils einer Steckbuchse (14; 15; 16) der Anschlußeinrichtung aus den einstückig nach außerhalb der Vorrichtung geführten Bändern (8a, 8b; 9a, 9b; 10a, 10b) einer Anschlußgruppe für das elektrischen Kontaktieren der jeweiligen Anschlußgruppe außerhalb der Vorrichtung.

9. Verfahren nach Anspruch 8, **gekennzeichnet dadurch, daß** das elektrische Verbinden der Wicklungsenden (17a, 17b; 18a, 18b; 19a, 19b) mit den zugehörigen Anschlußverteilern (8, 9, 10) in unmittelbarer Nähe der jeweiligen Spulenwicklung (6a, 6b, 6c) durch Einlegen in jeweils eine an den Anschlußverteilern (8, 9, 10) vorzugsweise einstückig vorgesehene Schneid-/Klemmeinrichtung (21) oder durch Kleben, Löten oder Schweißen erfolgt.

10. Verfahren nach Anspruch 8 oder 9, **dadurch gekennzeichnet, daß** die Aufnahmemittel (7) mit den eingelegten Anschlußverteilern (8 9, 10) dicht verschlossen werden, vorzugsweise durch Tauchen in ein elektrisch isolierendes Kunstharz, wobei vorzugsweise nach dem dichten Verschließen Kontaktstellen an den Anschlußverteilern (8, 9, 10) für das elektrische Verbinden mit den Wicklungsenden (17a, 17b; 18a, 18b; 19a, 19b) zugänglich sind.

11. Verfahren nach Anspruch 8 oder 9, **dadurch gekennzeichnet, daß** der Rotor (4) oder Stator (2) zusammen mit der an ihm festgelegten und mit den Wicklungsenden (17a, 17b; 18a, 18b; 19a, 19b) verbundenen Verbindungseinrichtung (7, 8, 9, 10) dicht verschlossen wird, vorzugsweise durch Tauchen in ein elektrisch isolierendes Kunstharz.

## Claims

1. A device for converting electrical energy into mechanical energy and/or vice versa, with a rotor (4) and a stator (2), especially a combined motor/generator device (1), whereby coil windings (6) with at least two winding ends (17a, 17b; 18a, 18b; 19a, 19b) arranged successively in the direction of the periphery on the rotor (4) and/or the stator (2), and the winding ends (17a, 17b; 18a, 18b; 19a, 19b) of the different coil windings (6a; 6b; 6c) are electrically connected together while forming connecting groups, whereby the device has a connecting device (7, 8, 9, 10) for connecting the winding ends (17a, 17b; 18a, 18b; 19a, 19b) of one connecting group with electrically conductive distributors (8, 9, 10) extending in the peripheral direction which are carried outside the device in one piece, each forming a connecting device by means of which the respective connecting group can be electrically contacted outside the device, **characterised in that** the distributors (8, 9, 10) of each connecting group have two conductive straps (8a, 8b; 9a, 9b; 10a, 10b) each of which is carried to the outside of the device in one piece and jointly forms a socket (14; 15; 16) for establishing there an electric contact to a respective connecting group.

2. A device according to Claim 1, **characterised in that** each winding end (17a, 17b; 18a, 18b; 19a, 19b) is connected with the associated distributor (8, 9, 10) in the direct vicinity of the respective coil winding (6a, 6b, 6c).

3. A device according to Claim 1 or 2, **characterised in that** the distributors (8, 9, 10) have a one-piece insulation displacement connector (21; 121) for electrical connection to the associated winding end (17a, 17b; 18a, 18b; 19a, 19b).

4. A device according to one of the Claims 1 to 3, **characterised in that** the two straps (8a, 8b; 9a, 9b; 10a, 10b) extend essentially in a semi-circle in the peripheral direction.

5. A device according to one of the Claims 1 to 4, **characterised in that** the two straps (110a, 1 10b) are connected together in the socket area by means of an elastic element, preferably by a corrugated locking ring (124).

6. A device according to one of the Claims 1 to 5, **characterised in that** the straps (8a, 8b; 9a, 9b; 10a, 10b) of the individual connecting groups are arranged axially one behind the other or have different diameters and are arranged concentrically radially one behind the other.

7. A device according to one of the Claims 1 to 6, **characterised in that** the distributors (8,9,10) are electrically insulated from each other in their arrangement in a locator (7) of the connecting device (7, 8, 9, 10) which can be axially or radially fixed to the rotor (4) and/or the stator (2).

8. A process for producing a device according to the Claims 1 to 7, in the following steps:
- Placing the electrically conductive straps (8a, 8b; 9a, 9b; 10a, 10b) of the distributors (8, 9, 10) in a locator (7) of the connecting device (7, 8, 9, 10) in such a way that the distributors (8, 9, 10) which do not belong to a common connecting group are electrically insulated from each other;
- fixing the connecting device (7, 8, 9, 10) at the rotor (4) and/or the stator (2);
- electrically connecting the winding ends (17a, 17b; 18a, 18b; 19a, 19b) to the associated distributors (8, 9, 10) and
- forming each plug socket (14; 15; 16) of the connecting device from the straps (8a, 8b; 9a, 9b; 10a, 10b) of a connecting group carried outside the device in one piece, to provide electric contact for the respective connecting group outside the device.

9. A process according to Claim 8, **characterised in that** the winding ends (17a, 17b; 18a, 18b; 19a, 19b) are electrically connected to the associated distributors (8, 9, 10) in the direct vicinity of the respective coil winding (6a, 6b, 6c) by placing them in a preferably one-piece insulation displacement connector (21) provided at each distributor (8, 9, 10) or by bonding, brazing or welding.

10. A process according to Claim 8 or 9, **characterised in that** the locators (7) are sealed together with the distributors (8, 9, 10) placed in them, preferably by dipping in an electrically insulating synthetic resin, whereby contact points at the distributors (8, 9, 10) for electrically connecting the winding ends (17a, 17b; 18a, 18b; 19a, 19b) are preferably accessible after sealing.

11. A process according to Claim 8 or 9, **characterised in that** the rotor (4) or the stator (2) are sealed together with the connecting device fixed to it and connected to the winding ends (17a, 17b; 18a, 18b; 19a, 19b), preferably by dipping in an electrically insulating synthetic resin.

## Revendications

1. Dispositif de transformation d'énergie électrique en énergie mécanique et / ou réciproquement avec un rotor (4) et un stator (2), en particulier un dispositif combiné moteur / génératrice (1), dans lequel au moins deux enroulements de bobine (6) présentant des extrémités d'enroulement (17a, 17b ; 18a, 18b ; 19a, 19b) sont disposés respectivement l'un après l'autre sur le rotor (4) et / ou sur le stator (2) dans une direction périphérique (13), et dans lequel les extrémités d'enroulement (17a, 17b ; 18a, 18b ; 19a, 19b) de différents enroulements de bobine (6a ; 6b ; 6c) sont reliés électriquement les uns aux autres moyennant formation de groupes de branchement, moyennant quoi le dispositif comporte un système de connexions (7, 8, 9, 10) pour la connexion des extrémités d'enroulement (17a, 17b ; 18a, 18b ; 19a, 19b) d'un groupe de branchement avec des distributeurs de branchement (8, 9, 10) conducteurs électriques et s'étendant dans la direction périphérique, qui sont conduits en une pièce vers l'extérieur du dispositif et qui forment respectivement un système de branchement, à l'aide duquel les groupes de branchement respectifs peuvent être contactés électriquement en dehors du dispositif, **caractérisé en ce que** les distributeurs de branchement (8, 9, 10) de chaque groupe de branchement comportent deux rubans conducteurs électriques (8a, 8b ; 9a, 9b ; 10a, 10b) s'étendant dans la direction périphérique, lesquels sont conduits respectivement en une pièce vers l'extérieur du dispositif et forment ensemble en cet endroit une prise femelle (14 ; 15 ; 16) pour l'établissement du contact électrique du groupe de branchement respectif.

2. Dispositif selon la revendication 1, **caractérisé en ce que** chaque extrémité d'enroulement (17a, 17b ; 18a, 18b ; 19a, 19b) est reliée au distributeur de branchement (8, 9, 10) correspondant à proximité immédiate de l'enroulements de bobine (6a, 6b, 6c).

3. Dispositif selon la revendication 1 ou 2, **caractérisé en ce que** les distributeurs de branchement (8, 9, 10) comportent un dispositif de coupe / serrage (21 ; 121) formé en une pièce pour la connexion électrique avec l'extrémité d'enroulement (17a, 17b ; 18a, 18b ; 19a, 19b) correspondante.

4. Dispositif selon l'une quelconque des revendications 1 à 3, **caractérisé en ce que** les deux rubans (8a, 8b ; 9a, 9b ; 10a, 10b) s'étendent essentiellement en forme de demi-cercle dans la direction périphérique.

5. Dispositif selon l'une quelconque des revendications 1 à 4, **caractérisé en ce que** dans la zone de la prise femelle (114) les deux rubans (110a, 110b) sont reliés ensemble par un élément élastique, de préférence par un circlip (124).

6. Dispositif selon l'une quelconque des revendications 1 à 5, **caractérisé en ce que** les rubans (8a, 8b ; 9a, 9b ; 10a, 10b) des différents groupes de branchement sont disposés axialement les uns derrière les autres, ou présentent des diamètres différents et sont disposés concentriquement radialement les uns derrière les autres

7. Dispositif selon l'une quelconque des revendications 1 à 6, **caractérisé en ce** les distributeurs de branchement (8, 9, 10) sont disposés isolés électriquement les uns des autres dans un moyen de logement (7) du système de connexions (7, 8, 9, 10) pouvant être fixé axialement ou radialement sur le rotor (4) et / ou sur le stator (2).

8. Procédé de fabrication d'un dispositif selon l'une quelconque des revendications 1 à 7, avec les étapes :
- mise en place des rubans conducteurs électriques (8a, 8b ; 9a, 9b ; 10a, 10b) des distributeurs de branchement (8, 9, 10) dans un moyen de logement (7) du système de connexions (7, 8, 9, 10) de telle sorte que les distributeurs de branchement (8, 9, 10) n'appartenant pas à un groupe de branchement commun sont isolés électriquement les uns des autres,
- fixation du système de connexions (7, 8, 9, 10) au rotor (4) et / ou au stator (2),
- connexion électrique des extrémités d'enroulement (17a, 17b ; 18a, 18b ; 19a, 19b) avec les distributeurs de branchement (8, 9, 10) correspondants et
- façonnage d'une prise femelle (14 ; 15 ; 16) respectivement du système de branchement en les rubans (8a, 8b ; 9a, 9b ; 10a, 10b) conduits en une pièce vers l'extérieur du dispositif pour l'établissement du contact électrique du groupe de branchement respectif en dehors du dispositif.

9. Procédé selon la revendication 8, **caractérisé en ce que** la connexion électrique des extrémités d'enroulement (17a, 17b ; 18a, 18b ; 19a, 19b) avec les distributeurs de branchement (8, 9, 10) correspondants s'effectue à proximité immédiate des enroulements de bobine (6a, 6b, 6c) correspondants par introduction dans un dispositif de coupe / serrage (21) respectif prévu de préférence en une pièce sur les distributeurs de branchement (8, 9, 10), ou par collage, brasage ou soudage.

10. Procédé selon la revendication 8 ou 9, **caractérisé en ce que** les moyens de logement (7) sont fermés en manière étanche par les distributeurs de branchement (8, 9, 10) en place, de préférence par immersion dans une résine synthétique isolante électrique, moyennant quoi, de préférence après la fermeture étanche, des points de contact sont accessibles sur les distributeurs de branchement (8, 9, 10) pour la connexion électrique avec les extrémités d'enroulement (17a, 17b ; 18a, 18b ; 19a, 19b).

11. Procédé selon la revendication 8 ou 9, **caractérisé en ce que** le rotor (4) ou le stator (2) est fermé de manière étanche, ensemble avec le système de connexions (7, 8, 9, 10) fixé dessus et relié aux extrémités d'enroulement (17a, 17b ; 18a, 18b ; 19a, 19b), de préférence par immersion dans une résine synthétique isolante électrique.
